# FASCICULE DE BREVET EUROPEEN

(11) **EP 3 003 863 B1**
(45) Date de publication et mention de la délivrance du brevet: **12.07.2017**
(21) Numéro de dépôt: 14730129.5
(22) Date de dépôt: 06.06.2014
(51) Int. Cl.: B64G 1/10, B64G 4/00, B64G 1/64

(54) **DISPOSITIF DE CAPTURE D'UN OBJET SPATIAL COMPRENANT UN ÉLÉMENT DE PRESSION ET AU MOINS DEUX ELEMENTS REFERMABLES SUR L'OBJET SPATIAL**
VORRICHTUNG ZUM EINFANGEN EINES RAUMOBJEKTS MIT EINEM DRUCKELEMENT UND MINDESTENS ZWEI AUF DEM RAUMOBJEKT WIEDERVERSCHLIESSBAREN ELEMENTEN
DEVICE FOR CAPTURING A SPACE OBJECT, INCLUDING A PRESSURE ELEMENT AND AT LEAST TWO RESEALABLE ELEMENTS ON THE SPACE OBJECT

(30) Priorité: 07.06.2013 FR 1355277
(43) Date de publication de la demande: 13.04.2016
(73) Titulaire: Airbus Safran Launchers SAS, 75015 Paris (FR)
(72) Inventeur: CHAMBERT, Matthieu, F-95870 Bezons (FR)
(74) Mandataire: Brevalex
(86) Numéro de dépôt international: PCT/EP2014/061850
(87) Numéro de publication internationale: WO 2014/195468

(56) Documents cités:
- WO-A1-2005/110847
- JP-A- H05 254 498
- US-A- 4 260 187
- US-A- 5 390 288
- US-A1- 2010 193 640
- US-A1- 2013 075 534
- US-A1- 2013 249 229

## Description

### DOMAINE TECHNIQUE

L'invention se rapporte au domaine des applications spatiales. Plus précisément, l'invention concerne des dispositifs pour la capture d'un objet spatial.

### ÉTAT DE LA TECHNIQUE ANTÉRIEURE

La prolifération dans l'espace de débris en orbite autour de la Terre génère d'importants problèmes en termes de coûts et de sécurité, notamment pour les vols spatiaux ou pour les satellites en activité. Différents systèmes de capture de ces déchets ont été proposés ou même implémentés dans le but d'en réduire le nombre. Les déchets capturés sont ensuite soit conduits dans l'atmosphère en vue de leur destruction, soit définitivement éloignés de la Terre de manière à ne plus constituer qu'un danger raisonnable et acceptable. Un dispositif de capture d'un objet spatial, comprenant des doigts, est connu de la demande internationale WO 2005/110847 A1, qui est considéré comme l'art antérieur le plus proche et décrit les caractéristiques du préambule de la revendication 1. Parmi les dispositifs de capture connus de l'art antérieur, certains présentent des contraintes importantes, notamment en termes de masse et d'encombrement, ce qui implique des coûts considérables. D'autres présentent de nombreux appareillages électroniques et électromécaniques sophistiqués. Il en découle une augmentation des coûts, une plus grande complexité et une réduction de la fiabilité de ces dispositifs. Enfin, les dispositifs connus sont trop souvent dédiés à la capture de types d'objet très spécifiques et dans des conditions particulières, ce qui conduit à une multiplication très coûteuse de dispositifs de capture à utiliser.

### EXPOSÉ DE L'INVENTION

L'invention vise à résoudre au moins partiellement les problèmes rencontrés dans les solutions de l'art antérieur.

A cet égard, l'invention a pour objet un dispositif de capture d'un objet spatial, comprenant :
- un élément de pression configuré pour venir en contact mécanique direct avec l'objet spatial à capturer,
- au moins deux éléments refermables mobiles entre une position d'ouverture en prévision de la capture de l'objet spatial et une position de fermeture pour la rétention de l'objet spatial,
- un moyen de transmission mécanique du mouvement de l'élément de pression à chaque élément refermable, le moyen de transmission mécanique étant configuré pour entraîner chaque élément refermable en déplacement entre la position d'ouverture et la position de fermeture par pression de l'objet spatial sur l'élément de pression.

Le dispositif comprend un support, le moyen de transmission mécanique comprenant en outre :
- au moins une barre d'appui sur laquelle est situé l'élément de pression, la barre d'appui étant configurée pour déplacer l'élément de pression en translation par rapport au support,
- au moins une tige de liaison reliant mécaniquement l'élément de pression à un des éléments refermables,
- au moins une charnière située entre le support et l'élément refermable, la tige de liaison faisant pivoter l'élément refermable autour de la charnière lors du déplacement en translation de l'élément de pression par rapport au support.

Le dispositif de capture est configuré pour être actionné de manière principalement mécanique par pression de l'objet spatial sur l'élément de pression. Le déplacement des éléments refermables entre la position d'ouverture et la position de fermeture s'effectue notamment de manière autonome et passive. En particulier, le dispositif de capture ne comporte pas de moyens complexes d'ouverture et/ou de fermeture des éléments refermables de nature électrique, électromécanique ou électronique tel qu'une pluralité de moteurs ou de moyens de commande complexes. Ainsi le dispositif de capture présente une grande fiabilité. Par ailleurs, l'énergie dégagée par le contact mécanique du dispositif de capture avec l'objet spatial est suffisante ou presque pour capturer l'objet spatial.

Du fait de sa relative simplicité mécanique, le dispositif de capture présente une masse relativement faible. Par ailleurs, il est apte capturer une gamme plus variée d'objets spatiaux. Le dispositif de capture permet notamment de capturer des objets spatiaux de géométries très variables.

Dans le cadre de l'invention, le support peut être de diverse nature. En particulier, le dispositif de capture peut être notamment configuré pour rester fixé au véhicule spatial, par exemple de manière rigide, durant la capture ou bien pour rester attaché au véhicule spatial par un câble.

Le véhicule spatial ayant transporté le dispositif de capture et/ou le dispositif de capture incluent également au moins un capteur pour évaluer la position relative de l'objet spatial et du dispositif de capture, ainsi que des moyens de propulsion dans l'espace.

L'invention peut comporter de manière facultative une ou plusieurs des caractéristiques suivantes combinées entre elles ou non :

Le dispositif de capture peut être notamment configuré pour capturer en orbite un satellite, une partie de satellite, un véhicule spatial ou une partie de véhicule spatial ainsi notamment que tout ou partie d'un étage supérieur de lanceur.

De préférence, l'élément de pression est configuré pour présenter une surface importante au regard de la taille du dispositif, afin de faciliter la capture de l'objet spatial. De ce fait, l'élément de pression est par exemple une plaque de pression.

En outre, l'élément de pression peut être configuré pour présenter une plus grande résistance mécanique que les éléments refermables.

Le dispositif de capture est de préférence configuré de sorte que l'élément de pression vienne en contact mécanique direct de l'objet spatial en position d'ouverture, notamment avant tout contact mécanique direct des éléments refermables et de l'objet spatial.

Avec une telle configuration, le dispositif de capture présente également une importante solidité, la capture de l'objet spatial ne requiert que peu de précision et la capture est d'autant plus aisée. De plus, du fait de la solidité de son mécanisme et surtout de sa simplicité, le dispositif de capture est notamment compatible avec l'organisation d'une nouvelle tentative de capture de l'objet spatial dans le cas de tentative de capture antérieure infructueuse.

Lors d'une tentative de capture ou bien sous l'effet d'efforts d'inertie, l'objet spatial pourrait être amené à rebondir sur l'élément de pression, ce qui pourrait conduire à une réouverture ultérieure des éléments refermables et la libération indésirable de l'objet spatial. Par conséquent, le moyen de transmission mécanique comprend de préférence un moyen de blocage en position de fermeture d'au moins un des éléments refermables.

Le moyen de blocage est configuré pour empêcher le déplacement ultérieur de l'élément refermable de la position de fermeture à la position d'ouverture une fois que l'objet spatial est venu en contact avec l'élément de pression. De préférence, le moyen de blocage est notamment configuré pour empêcher la réouverture de l'élément refermable tout au long de son déplacement de la position d'ouverture à la position de fermeture. Par ailleurs, lorsque le dispositif de capture est transporté, le moyen de blocage peut également servir à prévenir le déplacement accidentel des éléments refermables d'une position de transport à la position d'ouverture.

Lorsque le dispositif de capture comprend un moyen de blocage, le moyen de transmission mécanique comprend également de préférence un moyen de désenclenchement du moyen de blocage.

Le moyen de désenclenchement du moyen de blocage permet la réouverture de chaque élément refermable. Le moyen de désenclenchement du moyen de blocage contribue notamment à permettre de réaliser une nouvelle tentative de capture en cas de tentative de capture antérieure infructueuse. De plus, le moyen de désenclenchement du moyen de blocage peut également servir au déploiement des éléments refermables depuis la position de transport à la position d'ouverture.

Le désenclencement du moyen de blocage s'effectue de préférence par libération d'énergie mécanique emmagasinée lors de la fermeture des éléments refermables, notamment d'énergie potentielle élastique.

Le moyen de blocage comprend par exemple une crémaillère et au moins un cliquet, le cliquet étant configuré pour s'engager dans la crémaillère en formant un dispositif anti-retour.

En alternative, le moyen de blocage peut comprendre une roue crantée et au moins un cliquet, le cliquet étant configuré pour s'engager avec la roue crantée en formant un dispositif anti-retour.

Dans l'une ou l'autre des deux configurations précédentes, le moyen de désenclenchement du moyen de blocage comprend de préférence un fil attaché au cliquet.

Lorsque le moyen de blocage est une roue crantée, le fil métallique passe de préférence par le centre de la roue crantée, le moyen de blocage étant désenclenché par traction sur le fil métallique depuis le centre de la roue crantée.

Dans une telle configuration du dispositif de capture, il est notamment possible de désengager simultanément une pluralité de cliquets par l'intermédiaire d'un moyen de contrôle à distance agissant de manière centralisée.

Il est préférable que chaque élément refermable soit un bras de capture articulé comprenant une pluralité de segments d'articulation.

Chaque bras articulé est alors de préférence configuré pour être replié dans une position supplémentaire pour le transport du dispositif.

Les éléments refermables sont alors configurés pour se trouver repliés en position de transport lorsque le dispositif est intégré à un véhicule spatial, afin de limiter l'encombrement du dispositif de capture lors de son transport.

Lorsque le véhicule spatial se trouve à proximité de l'objet spatial à capturer, le dispositif est configuré de manière à ce que les éléments refermables se déplacent de la position de transport à la position d'ouverture.

Le dispositif de capture de l'objet spatial comprend de préférence au moins un moyen additionnel de sécurisation de la capture, configuré pour garder l'objet spatial capturé une fois que les éléments refermables sont en position de fermeture.

Aussi, le dispositif comprend de préférence au moins un élément de contact secondaire mobile entre une position de déploiement et une position de sécurisation de la capture de l'objet spatial, l'élément de contact secondaire étant configuré pour rester en position de déploiement durant le déplacement des éléments refermables de la position d'ouverture à la position de fermeture.

Autrement dit, lorsque le dispositif de capture comprend un élément de contact secondaire, l'élément de contact secondaire est configuré de sorte que son déplacement de la position de déploiement à la position de sécurisation ait lieu en retard par rapport au déplacement des éléments refermables de la position d'ouverture à la position de fermeture.

En particulier, le dispositif de capture peut être configuré pour que le déplacement de l'élément de contact secondaire de la position de déploiement à la position de sécurisation ait lieu : soit une fois que le déplacement des éléments refermables de la position d'ouverture à la position de fermeture a seulement eu lieu en partie, soit seulement une fois que les éléments refermables sont en position de fermeture.

L'élément de contact secondaire est de préférence configuré pour être en position de sécurisation uniquement lorsque les éléments refermables sont déjà en position de fermeture.

L'élément de contact secondaire peut être de différente nature, par exemple un élément de contact de pression, un bras de capture articlé ou un segment d'articulation d'un bras de capture.

Le dispositif de capture comprend de préférence un amortisseur de chocs mécaniques, notamment présent sur l'élément de pression et/ou sur au moins un des éléments refermables.

L'amortisseur est de préférence un tampon déformable. Le tampon déformable est de préférence configuré pour épouser sensiblement la forme de l'objet spatial. Il peut s'agir notamment d'une structure ou d'une mousse, éventuellement en forme de nid d'abeilles, notamment en matériau métallique comprenant plus de 50 % en masse d'aluminium.

Le dispositif de capture comprend également de préférence un adhésif réversible comprenant une pluralité de filaments configurés pour former des liaisons de Van der Waals avec l'objet spatial. De tels matériaux sont également connus sous la dénomination « de matériaux de type gecko ». Des exemples de ces matériaux ont été décrits dans les documents US 2010/0252177 et US 2008/0257485.

En variante, le dispositif de capture peut inclure d'autres types d'adhésifs. En particulier, le dispositif peut comprendre une surface adhésive comprenant un adhésif sensible à la pression, par exemple un adhésif connu sous le nom « de scotch ^{®} ».

Quel que soit la nature de l'adhésif, l'adhésif se situe de préférence sur la surface de l'élément de pression, une surface interne d'un ou de plusieurs éléments refermables ou sur la surface interne d'un ou de plusieurs éléments de contact secondaires.

Le dispositif de capture est de préférence symétrique par symétrie plane.

En particulier, le moyen de transmission mécanique comprend de préférence une pluralité d'éléments de transmission mécanique, chacun relié mécaniquement directement à un des éléments réfermables, les éléments refermables et les éléments de transmission mécanique étant agencés sensiblement symétriquement soit par symétrie plane, soit par symétrie axiale, de préférence selon un axe orthogonal au plan du support.

L'invention concerne également un procédé de capture d'un objet spatial comprenant une étape préalable durant laquelle le dispositif de capture tel que défini précédemment est transporté à proximité de l'objet spatial, le dispositif de capture ayant une vitesse relative par rapport à l'objet spatial relativement faible au moment de la capture, étape durant laquelle les éléments refermables sont en position d'ouverture immédiatement avant la capture, les éléments refermables se déplaçant de la position d'ouverture à la position de fermeture par pression de l'objet spatial sur la plaque de pression.

Le procédé de capture comprend de préférence une étape supplémentaire de sécurisation de la capture de l'objet spatial, étape durant laquelle l'élément de contact secondaire se déplace de la position de déploiement à la position de sécurisation, les éléments refermables ayant déjà amorcé leur déplacement de la position d'ouverture à la position de fermeture. Par ailleurs, l'étape de sécurisation de la capture s'effectue de préférence du fait de la libération d'énergie mécanique emmagasinée au préalable, notamment d'énergie potentielle élastique emmagasinée par un système passif de stockage d'énergie élastique activé lors de la fermeture des éléments refermables.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1 est une représentation en perspective d'un dispositif de capture illustrant un mode de réalisation de l'invention;
- la figure 2 est une vue de côté du dispositif de capture de la figure 1;
- les figures 3a, 4a, 5a, sont des vue schématiques partielles en perspective illustrant plusieurs modes de réalisation distincts de l'invention incorporant des caractéristiques facultatives permettant un réglage fin de la position de fermeture ;
- les figures 3b, 4b, 5b sont des vues partielles en coupe des modes de réalisations illustrés respectivement aux figures 3a, 4a, 5a ;
- les figures 6 et 6a représentent partiellement le moyen de transmission mécanique du mouvement d'un mode de réalisation de l'invention, la figure 6a étant un agrandissement de la figure 6 ;
- la figure 6b est un agrandissement de la figure 6a, représentant un premier mode de réalisation du moyen de blocage d'un dispositif de capture selon l'invention ;
- la figure 7 illustre un mode de réalisation préféré du moyen de désenclenchement du moyen de blocage de la figure 6b.
- la figure 8 est une vue en perspective partielle d'un moyen de blocage présenté à titre d'alternative de celui de la figure 6b;
- la figure 9 est une vue en perspective d'un mode de réalisation préféré du dispositif de capture de l'invention dans une configuration incluant des éléments de contact secondaire, aux extrémités de bras de capture;
- les figures 10 à 14 illustrent des séquences du procédé de déploiement d'un autre mode de réalisation préféré de l'invention, les figures 11a, 12a et 13a étant respectivement des agrandissements des figures 11, 12, 13 et 14, détaillant la position des éléments refermables et de charnières ; et
- les figures 15 et 16 illustrent la capture de deux types distincts d'objets spatiaux
- les figures 17 et 18 illustrent deux autres modes de réalisations préférés du dispositif de capture.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

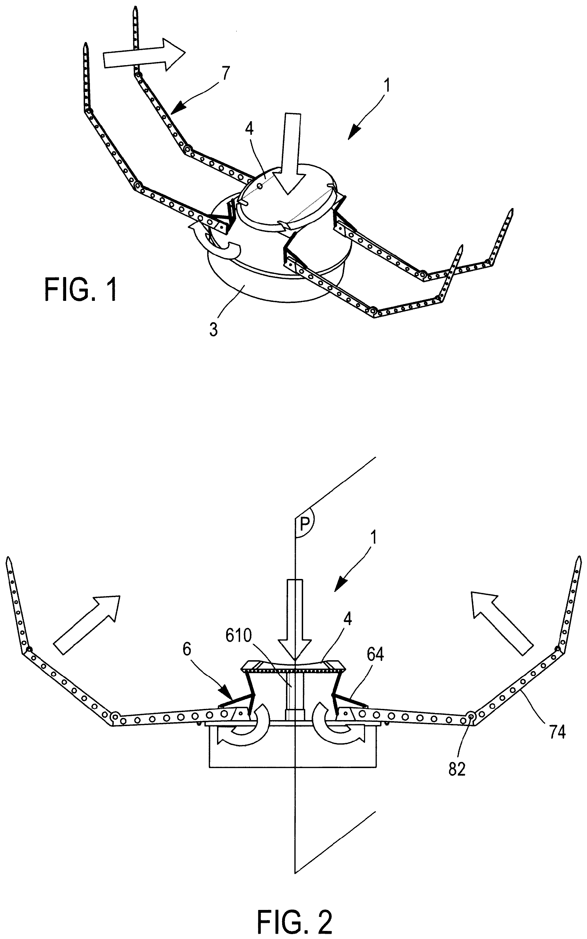

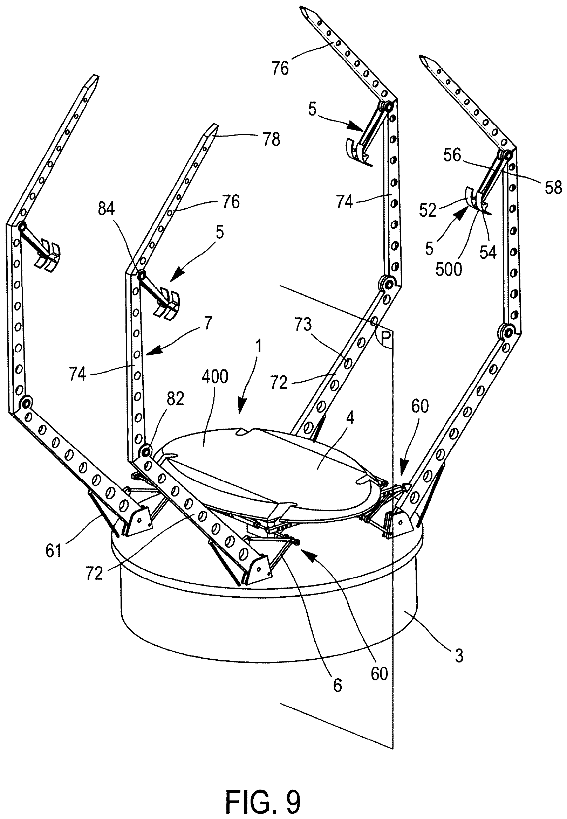

La figure 1 et la figure 2 représentent un dispositif de capture 1 d'un objet spatial 2. Le dispositif de capture 1 est sensiblement symétrique par symétrie plane de plan P. Le dispositif 1 comprend un support 3 représenté de manière schématique et quatre éléments refermables 7 montés sur le support 3, les éléments refermables 7 permettant de capturer l'objet spatial 2. Les éléments refermables 7 sont mobiles entre une position d'ouverture en prévision de la capture de l'objet spatial 2 et une position de fermeture pour la rétention de l'objet spatial 2. Sur ces deux figures, les éléments refermables 7 sont représentés en position d'ouverture. Les éléments refermables 7 seront décrits plus en détail en référence à la figure 9.

Le support 3 peut être de diverse nature en fonction de la liaison mécanique du dispositif de capture 1 avec le véhicule spatial (non représenté) utilisé pour le transport du dispositif 1. En particulier, le support 3 est par exemple une partie de la structure principale du véhicule spatial, le prolongement d'un bras (non représenté) fixé au véhicule spatial ou bien encore un élément rattaché à un câble (non représenté) de liaison au véhicule spatial.

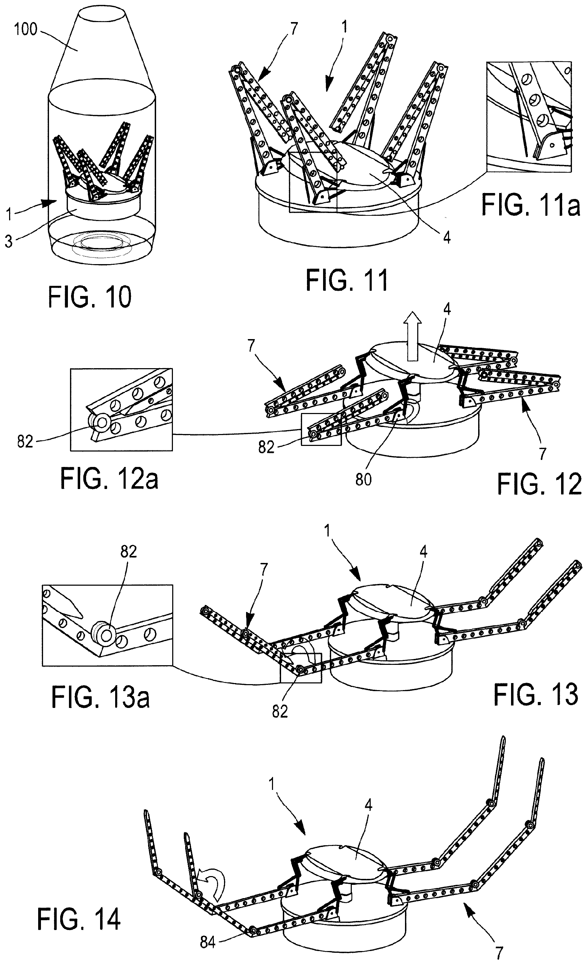

Lors de son transport à l'intérieur d'un lanceur spatial (non représenté) comprenant le véhicule spatial, en référence à la figure 10, le dispositif de capture 1 est de préférence configuré pour occuper un espace réduit correspondant au maximum à l'espace de charge moyen 100 également connu sous le nom de « volume sous coiffe » du lanceur. En particulier, le lanceur ou le véhicule spatial qu'il contient peuvent transporter plusieurs dispositifs de capture 1 à chaque voyage. Le lanceur est de préférence un lanceur commercial standard, par exemple de la famille Ariane^{®}, Soyouz^{®}, Vega^{®}, etc.

En référence aux figures 1 à 9, le dispositif de capture 1 comprend un élément de pression 4 configuré pour venir en contact mécanique direct avec l'objet spatial 2 à capturer lorsque les éléments refermables 7 sont en position d'ouverture.

Le dispositif de capture 1 est notamment configuré pour que l'élément de pression 4 vienne en contact mécanique de l'objet spatial 2 avant tout contact mécanique des éléments refermables 7 et de l'objet spatial 2.
Sur ces figures, l'élément de pression est une plaque de pression 4 est recouverte d'un amortisseur 400 de chocs mécaniques. L'amortisseur 400 des modes de réalisation illustrés aux figures 1 à 9 est un tampon déformable configuré pour épouser sensiblement la forme de l'objet spatial 2. Le tampon déformable est notamment une structure ou une mousse, en forme de nid d'abeilles, comprenant plus de 50% en masse d'aluminium.

L'amortisseur 400 est de préférence réalisé de manière à former une pluralité de couches successives configurées pour permettre un amortissement successif et/ou configurées pour préserver au moins en partie les performances mécaniques de l'amortisseur 400 lors d'une éventuelle tentative de capture ultérieure.

L'élément de pression 4 est également recouvert en surface par un adhésif réversible 500 permettant la solidarisation du dispositif de capture 1 et de l'objet spatial 2. L'amortisseur 400 et l'adhésif réversible 500 sont notamment aptes à limiter le rebond de l'objet spatial 2 sur l'élément de pression 4. Ainsi, ils permettent de limiter la réouverture indésirable des éléments refermables 7 lorsqu'ils entourent l'objet spatial 2. L'adhésif réversible 500 est notamment situé sur une majeure partie voire sur la totalité la surface de contact mécanique direct du dispositif de capture 1 avec l'objet spatial 2.

L'adhésif réversible 500 comprend une pluralité de filaments configurés pour former des liaisons de Van der Waals avec l'objet spatial 2. De tels adhésifs réversibles 500 sont également connus sous la dénomination « de matériaux de type gecko ». Ils sont fabriqués par exemple par la société « BAE Systems ».

L'élément de pression 4 du dispositif 1 représenté aux figures 1 à 9 est mobile par rapport au support 3 selon un mouvement de translation. De ce fait, le dispositif de capture 1 comprend un moyen de transmission mécanique 6 du mouvement de l'élément de pression 4 à chaque élément refermable 7. Le moyen de transmission mécanique 6 est configuré pour entraîner chaque élément refermable 7 en déplacement entre la position d'ouverture et la position de fermeture par pression de l'objet spatial 2 sur l'élément de pression 4.

Le moyen de transmission mécanique 6 comprend une barre d'appui 610 sur laquelle est situé l'élément de pression 4. Selon le mode de réalisation des figures 1 à 9, l'élément de pression 4 est fixe par rapport à la barre d'appui, la barre d'appui 610 étant montée coulissable dans le support 3 creux.

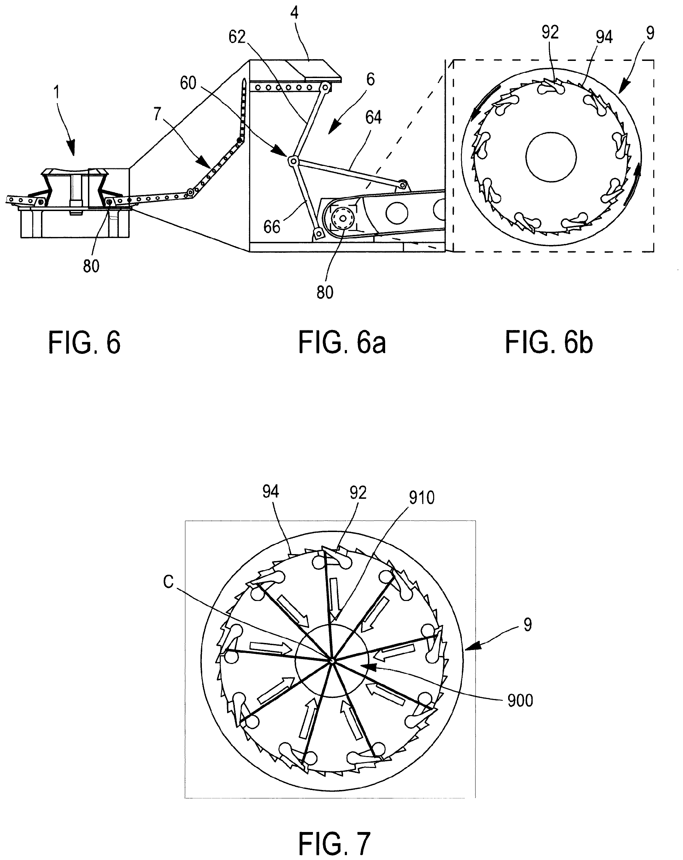

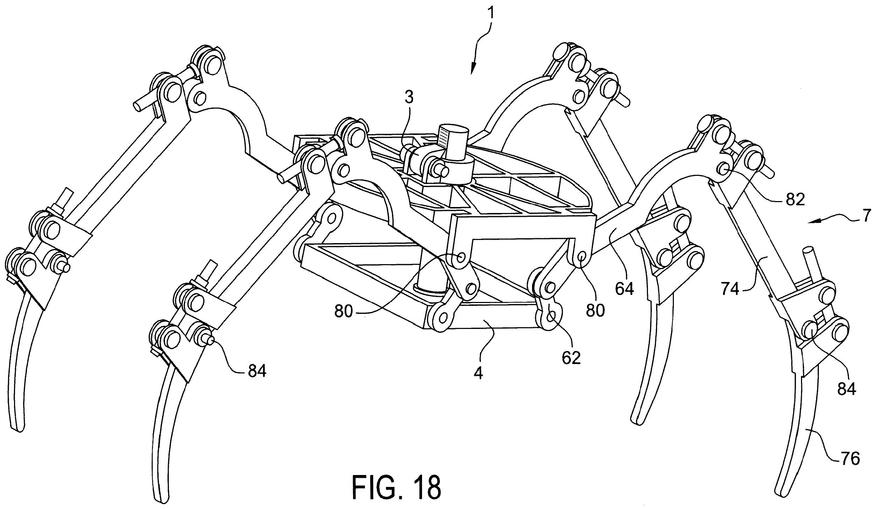

Le moyen de transmission mécanique 6 comprend une pluralité d'éléments de transmission mécanique 60 représentés plus en détail aux figures 6, 6a et 18. Chaque élément de transmission mécanique 60 est relié mécaniquement directement à un des éléments réfermables 7 et à la plaque de pression 4, de manière à actionner le déplacement de cet élément refermable 7 entre la position d'ouverture et la position de fermeture par déplacement de l'élément de pression 4 par rapport au support 3.

Plus précisément, les éléments de transmission mécanique 60 sont configurés pour permettre à chaque élément refermable 7 de pivoter autour d'une charnière 80 réalisant la jonction mécanique du support 3 et de l'élément refermable 7.

En référence aux figures 6 et 6a, chacun des éléments de transmission mécanique 60 comprend trois tiges de liaison 62, 64, 66 reliées de manière concourante par une charnière de liaison centrale. Les tiges de liaison 62, 64, 66 sont configurées pour faire pivoter l'élément refermable 7 autour de la charnière 80.

Dans la variante de réalisation de la figure 18, chaque élément de transmission mécanique 60 comprend deux tiges de liaison 62, 64 au lieu de trois. Dans ce cas, la géométrie de la base des éléments refermables 7 est adaptée en conséquence.

En référence plus spécifiquement aux figures 6b, 7 et 8, le moyen de transmission mécanique 6 comprend un moyen de blocage 9 en position de fermeture d'au moins un des éléments refermables 7. De préférence, chaque élément de transmission mécanique 60 comprend un moyen de blocage 9.

Le moyen de blocage 9 est configuré pour former un dispositif anti retour empêchant la réouverture de l'élément refermable 7, une fois que l'élément refermable 7 est sensiblement en position de fermeture. Le moyen de blocage 9 est notamment configuré pour empêcher la réouverture de l'élément refermable 7 tout au long de son déplacement de la position d'ouverture à la position de fermeture. Le moyen de blocage 9 peut être réalisé de diverses manières.

Selon un premier mode de réalisation du moyen de blocage 9 représenté aux figures 6b et 7, le moyen de blocage 9 comprend une roue crantée 94 et au moins un cliquet 92, de préférence une pluralité de cliquets 92, venant en butée dans les encoches formées par les crans de la roue crantée 94.

Les cliquets 92 sont configurés pour ne permettre la rotation de la roue crantée présente au niveau de la charnière 80 que dans le sens correspondant au déplacement de l'élément refermable 7 de la position d'ouverture à la position de fermeture.

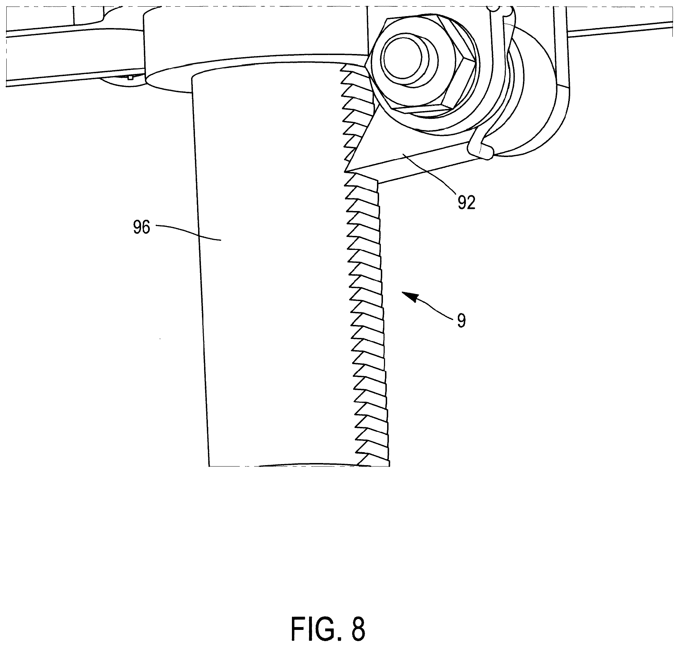

Selon la variante de réalisation du moyen de blocage 9 représentée à la figure 8, le moyen de blocage 9 comprend une crémaillère 96 et au moins un cliquet 92, le cliquet 92 étant configuré pour s'engager dans la crémaillère 96.

De manière similaire, le cliquet 92 ne peut se déplacer le long de la crémaillère 96 que dans le sens correspondant au déplacement de l'élément refermable 7 de la position d'ouverture à la position de fermeture.

Lorsque le moyen de transmission mécanique 6 comprend un moyen de blocage 9, le moyen de transmission mécanique 6 comprend également un moyen de désenclenchement 900 du moyen de blocage 9, permettant notamment une tentative ultérieure éventuelle de capture de l'objet spatial 2.

La figure 7 représente un moyen de désenclenchement 900 du moyen de blocage 9 correspondant au premier mode de réalisation du moyen de blocage 9. Le moyen de désenclenchement 900 du moyen de blocage 9 comprend une pluralité de fils métalliques 910 attachés chacun à un des cliquets 92. Le moyen de blocage 9 est désenclenché par traction sur chaque fil métallique 910 depuis le centre C de la roue crantée 94 par lequel passe chaque fil métallique 910. La partie amovible de chaque cliquet 92 configurée pour s'engager dans les encoches de la roue crantée 94 s'éloigne alors de la périphérie de la roue crantée, ce qui permet la rotation de la roue crantée 94 dans le sens correspondant au déplacement de l'élément refermable 7 de la position de fermeture à la position d'ouverture.

En référence également à la figure 9, le désenclencement 900 du moyen de blocage s'effectue par libération d'énergie mécanique emmagasinée lors de la fermeture des éléments refermables 7. Cette énergie mécanique provient de l'énergie potentielle élastique emmagasinée par les ressorts 61 fixés sur chacun des éléments refermables 7.

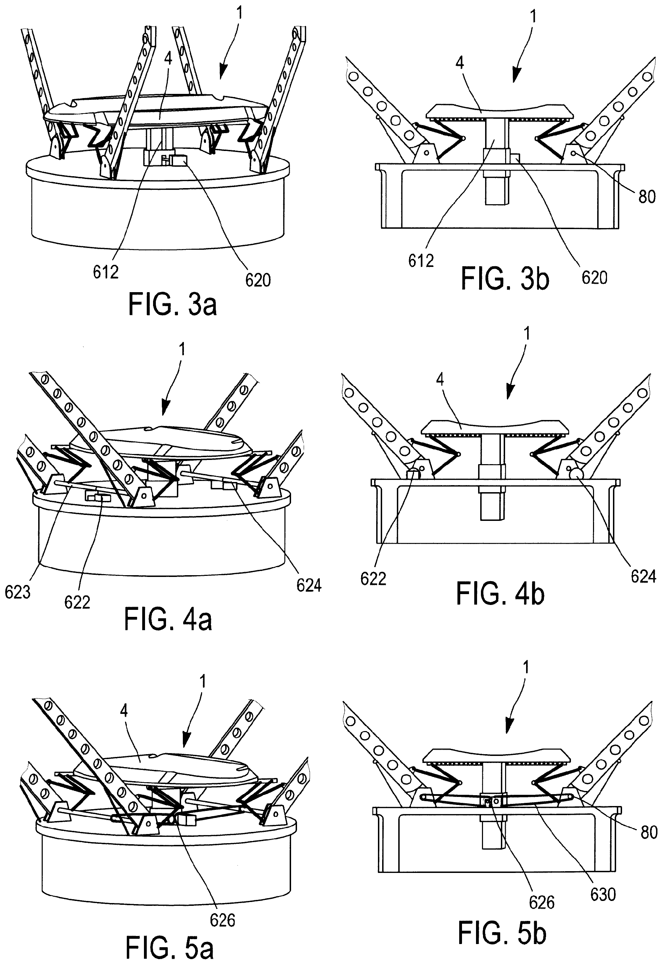

Les figures 3a, 4a et 5a, respectivement les figures 3b, 4b et 5b, représentent trois alternatives distinctes de modes de réalisations d'un moyen de contrôle de fermeture en fin de capture du moyen de transmission mécanique 6, les moyens de blocage 9 et les moyens de désenclenchement 900 des moyens de blocage n'étant pas représentés sur ces figures pour plus de lisibilité. Le moyen de transmission mécanique 6 de chacun de ces modes de réalisation comprend un moyen mécanique additionnel de contrôle du déplacement des éléments refermables 7, configuré pour adapter et réguler le serrage des éléments refermables autour de l'objet spatial 2 en position de fermeture. En particulier, le moyen additionnel est configuré pour permettre de resserrer les éléments refermables 7 autour de l'objet spatial 2 si nécessaire ou au contraire de les desserrer légèrement.

Le moyen de transmission mécanique 6 du dispositif 1 des figures 3a, 3b se distingue de celui des figures 1 et 2 en ce que la barre d'appui 610 comprend une rainure borgne 612 dans laquelle vient s'engager une roue dentée fixée sur la tige d'un moteur 620. Le moteur 620 permet de corriger le déplacement de l'élément de pression 4 solidaire de la barre d'appui 610 par rapport au support 3. De préférence, le moyen de transmission mécanique 6 comprend un mécanisme motorisé pour engager/désengager la tige du moteur 620 de la rainure 612 au moment de la capture de l'objet spatial 2. Le mécanisme motorisé permet notamment un déplacement libre de l'élément de pression 4, tant que le mécanisme motorisé n'est pas actionné.

Le moyen de transmission mécanique 6 du dispositif 1 des figure 4a, 4b se distingue de celui des figures 1 et 2 en ce qu'il comprend en outre deux tiges de transmission 623 chacune reliant mécaniquement les charnières 80 à la base de deux éléments refermables 7 consécutifs, ainsi que deux moteurs 622, 624 situés chacun respectivement sur une des tiges de transmission 623.

Le moyen de transmission mécanique 6 du dispositif 1 des figures 5a, 5b se distingue de celui des figures 1 et 2 en ce qu'il comprend deux tiges de transmission 623 chacune reliant mécaniquement les charnières 80 à la base de deux éléments refermables 7 consécutifs, un moteur 626 et une courroie 630 reliant mécaniquement les tiges de transmission 623 et le moteur 626. Le moyen de transmission mécanique 6 des figures 5a, 5b se distingue de celui des figures 4a, 4b en ce qu'il comprend un seul moteur au lieu de deux.

Le moyen de transmission mécanique 6 des figures 3a, 3b modifie directement le déplacement de l'élément de pression 4 et indirectement le déplacement des éléments refermables 7. A contrario, le moyen de transmission mécanique 6 de chacun des modes de réalisation des figures 4a, 5a modifie le déplacement des éléments refermables 7 par action au niveau de chaque charnière 80 et indirectement le déplacement de l'élément de pression 4.

En référence plus spécifiquement à la figure 9, chaque élément refermable 7 est un bras de capture 7 articulé comprenant trois segments d'articulation 72, 74, 76 reliés entre eux par des charnières intermédiaires 82, 84 similaires à la charnière 80. Chaque segment d'articulation 72, 74, 76 comprend de préférence une pluralité d'évidements 73 permettant de réduire la masse des éléments refermables 7. Le troisième segment d'articulation 76 se termine par un segment d'extrémité 78.

Contrairement au dispositif de capture 1 représenté aux figures 9 à 11, celui représenté à la figure 18 ne comprend que deux segments d'articulation 74, 76 reliés entre eux par une charnière intermédiaire 84. Plus précisément, la tige de liaison 64 se prolonge de sorte à former un premier segment d'articulation 72 relié au deuxième segment d'articulation 74.

En référence aux figures 9 à 11, les éléments refermables 7 sont configurés pour se replier dans une position supplémentaire pour le transport du dispositif 1, appelée position de transport. Les éléments refermables 7 sont notamment représentés en détail en position de transport à la figure 11. La position de transport correspond de préférence à la position stable des éléments refermables 7 dans laquelle l'encombrement latéral du dispositif de capture 1 est la plus faible.

En position de transport, le troisième segment d'articulation 76 est configuré pour se replier en recouvrant entièrement le deuxième segment d'articulation 74. La deuxième charnière 82 est plus éloignée de la plaque de pression 4 que la troisième charnière 84. La plaque de pression 4 est sensiblement en contact mécanique direct du support 3. De préférence, le moyen de blocage 9 de chaque charnière 80 est configuré pour maintenir chaque élément refermable 7 de manière à éviter le déplacement intempestif des éléments refermables 7 de la position de transport à la position d'ouverture.

En référence de nouveau plus spécifiquement à la figure 9, chaque bras de capture 7 comprend par ailleurs un élément de contact secondaire 5 mobile entre une position de déploiement et une position de sécurisation de la capture de l'objet spatial 2. L'élément de contact secondaire 5 est configuré pour rester en position de déploiement pendant un certain temps durant le déplacement de l'élément refermable 7 de la position d'ouverture à la position de fermeture. Afin de fournir à chaque élément de contact secondaire 5 l'énergie mécanique nécessaire pour sécuriser la capture de l'objet spatial 2, Le dispositif de capture 1 comprend un système passif de stockage d'énergie mécanique activé lors de la fermeture des éléments refermables 7. Le système passif de stockage d'énergie mécanique comprend notamment les ressorts 61 fixés sur les éléments refermables 7.

A la figure 9, chaque élément de contact secondaire 5 a la forme de deux lames courbes 52, 54 chacune située au bout d'une tige 56, 58 raccordée à la troisième charnière 84.

En position de fermeture, chaque élément de contact secondaire 5 est configuré pour venir en contact mécanique direct avec l'objet spatial 2, ce qui provoque le repliement du troisième segment d'articulation 76 autour de l'objet spatial 2, en position de sécurisation de la capture de l'objet spatial 2. L'amortisseur 400 est de préférence présent sur chaque élément refermable 7, surtout lorsque le dispositif de capture 1 comprend un moyen de blocage 9, de manière à favoriser les chocs mous de l'objet spatial 2 et des éléments refermables 7. Par ailleurs, l'amortisseur 400 et l'adhésif réversible 500 sont de préférence présents sur chaque élément de contact secondaire 5.

Les éléments de contact secondaire 5 pourraient avoir une configuration différente de celle de la figure 9, par exemple similaire à celles des éléments refermables 7, du moment qu'ils sont configurés pour se déplacer de la position de déploiement à la position de sécurisation de la capture avec retard par rapport au déplacement des éléments refermables 7 de la position d'ouverture à la position de fermeture.

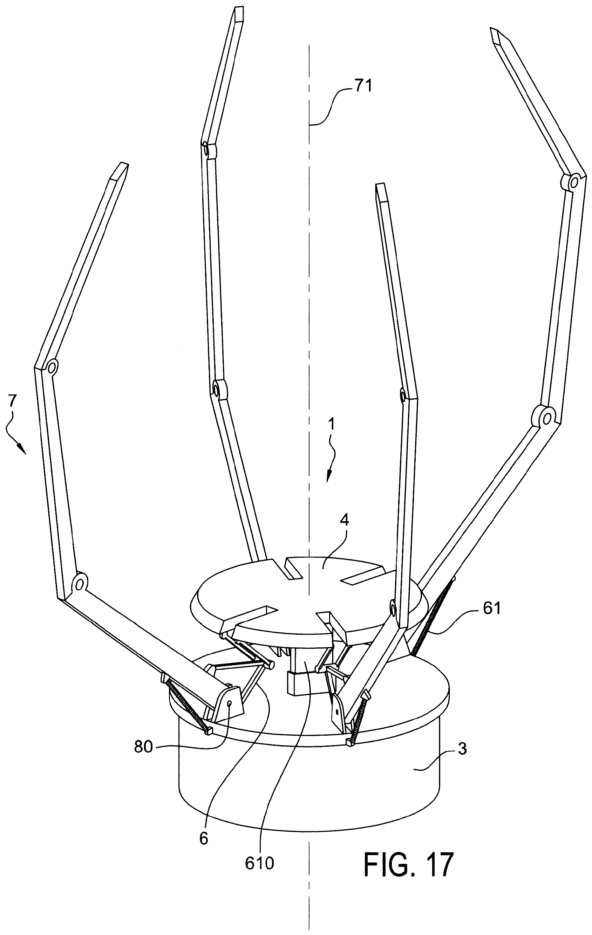

Le dispositif de capture de la figure 17 se distingue de celui des figures 1 à 10 et de celui de la figure 18, en ce qu'il est symétrique par rapport à un axe 71 orthogonal au support 3.

Les figures 11 à 14 illustrent le procédé de déploiement du dispositif de capture 1. Dans une première étape représentée à la figure 12, les éléments refermables 7 pivotent latéralement autour de la charnière 80 tandis que la plaque de pression 4 se relève au maximum. Puis les segments d'articulation 74, 76 pivotent ensemble par rapport au premier segment d'articulation 72 autour de la charnière 82. Enfin, le troisième segment d'articulation 76 pivote par rapport au deuxième segment d'articulation autour de la charnière 84 pour se trouver finalement en position d'ouverture représentée à la figure 14.

Lorsque les moyens de blocage 9 servent à maintenir le dispositif de capture 1 en position de transport, les moyens de désenclenchement des moyens de blocage sont actionnés pour permettre le déplacement des éléments refermables de la position de transport la position d'ouverture.

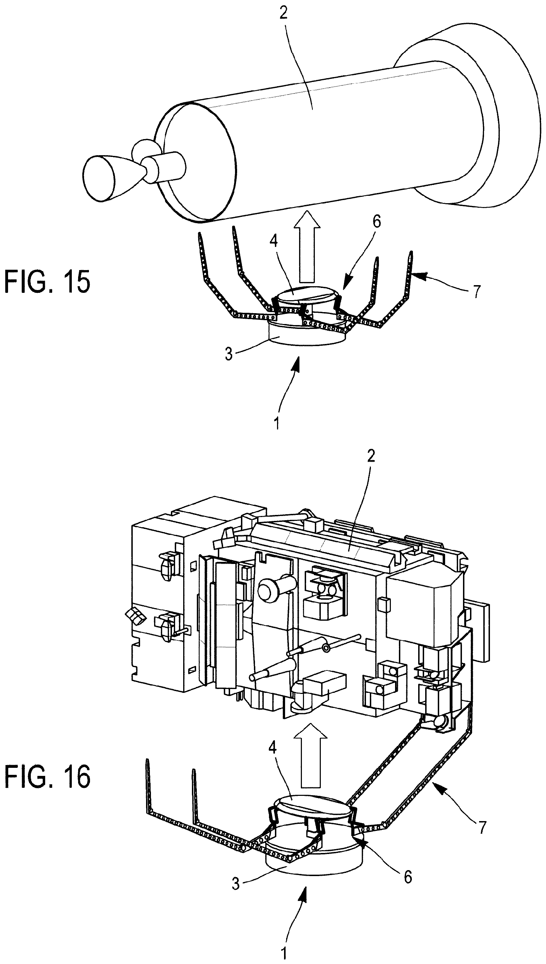

En référence aux figures 15 et 16, il est représenté un procédé de capture de différents types d'objets spatiaux 2. L'objet spatial 2 peut être une partie de lanceur, par exemple un étage supérieur standard d'une fusée connue sous le nom d' « Ariane 4 » représenté à la figure 15. Il peut s'agir également d'un satellite ou d'une partie de satellite représentée à la figure 16.

En particulier, malgré les différences de ces deux types d'objets spatiaux, le dispositif de capture 1 représenté sur ces deux figures a sensiblement la même configuration. Le dispositif de capture de la figure 16 se distingue notamment surtout de celui de la figure 15 en ce que les éléments refermables sont de forme plus allongée, afin d'avoir une meilleure préhension sur le satellite.

Dans les deux cas, le procédé de capture de l'objet spatial 2 reste similaire. Peu avant la capture, le dispositif de capture 1 s'achemine vers l'objet spatial 2 avec une vitesse relative maîtrisée par rapport à l'objet spatial 2. Les éléments refermables 7 sont en position d'ouverture. La plaque de pression 4 est relevée de manière à venir en contact mécanique direct de l'objet spatial 2.

La pression de l'objet spatial 2 sur la plaque de pression provoque l'abaissement de celle-ci, de préférence selon un mouvement de translation. D'autres types de mouvement de la plaque de pression 4, par exemple un mouvement hélicoïdal sont également envisageables. Les éléments refermables 7 ne viennent en contact mécanique direct de l'objet spatial 2 que lorsqu'ils sont sensiblement en position de fermeture.

Une fois la capture de l'objet spatial 2 achevée, celui-ci peut être soit éloigné définitivement de la Terre, soit être conduit dans l'atmosphère terrestre en vue de sa destruction. Dans le premier cas, le dispositif de capture 1 peut éventuellement être réutilisé. Dans le deuxième cas, une réutilisation du dispositif de capture 1 serait envisageable en détachant l'objet spatial 2 du dispositif de capture 1 avant de faire rentrer l'objet spatial 2 dans l'atmosphère par un moyen dédié.

Bien entendu, diverses modifications peuvent être apportées par l'homme du métier à l'invention qui vient d'être décrite sans sortir du cadre de l'exposé de l'invention.

## Revendications

1. Dispositif de capture (1) d'un objet spatial (2), **caractérisé en ce qu'**il comprend :
- un élément de pression (4) configuré pour venir en contact mécanique direct avec l'objet spatial (2) à capturer,
- un support (3),
- au moins deux éléments refermables (7) mobiles entre une position d'ouverture en prévision de la capture de l'objet spatial (2) et une position de fermeture pour la rétention de l'objet spatial (2),
- un moyen de transmission mécanique (6) du mouvement de l'élément de pression (4) à chaque élément refermable (7), le moyen de transmission mécanique (6) étant configuré pour entraîner chaque élément refermable (7) en déplacement entre la position d'ouverture et la position de fermeture par pression de l'objet spatial (2) sur l'élément de pression (4), le dispositif de capture (1) est **caractérisé en ce que** le moyen de transmission mécanique (6) comprend :
- au moins une barre d'appui (610) sur laquelle est situé l'élément de pression (4), la barre d'appui (610) étant configurée pour déplacer l'élément de pression (4) en translation par rapport au support (3),
- au moins une tige de liaison (62, 64, 66) reliant mécaniquement l'élément de pression (4) à un des éléments refermables (7),
- au moins une charnière (80) située entre le support (3) et l'élément refermable (7), la tige de liaison (62, 64, 66) faisant pivoter l'élément refermable (7) autour de la charnière (80) lors du déplacement en translation de l'élément de pression (4) par rapport au support (3).

2. Dispositif (1) selon la revendication 1, **caractérisé en ce qu'**il est configuré de sorte que l'élément de pression (4) vienne en contact mécanique direct de l'objet spatial (2) en position d'ouverture, avant tout contact mécanique direct des éléments refermables (7) et de l'objet spatial (2).

3. Dispositif (1) selon la revendication 1 ou la revendication 2, **caractérisé en ce que** le moyen de transmission mécanique (6) comprend un moyen de blocage (9) en position de fermeture d'au moins un des éléments refermables (7).

4. Dispositif (1) selon la revendication 3, **caractérisé en ce que** le moyen de transmission mécanique (6) comprend un moyen de désenclenchement (900) du moyen de blocage (9).

5. Dispositif (1) selon la revendication 3 ou la revendication 4, **caractérisé en ce que** le moyen de blocage (9) comprend une crémaillère (96) et au moins un cliquet (92), le cliquet (92) étant configuré pour s'engager dans la crémaillère (96) en formant un dispositif anti-retour.

6. Dispositif (1) selon la revendication 3 ou la revendication 4, **caractérisé en ce que** le moyen de blocage (9) comprend une roue crantée (94) et au moins un cliquet (92), le cliquet (92) étant configuré pour s'engager avec la roue crantée (94) en formant un dispositif anti-retour.

7. Dispositif (1) selon la revendication 4 et l'une quelconque des revendications 5 ou 6, **caractérisé en ce que** le moyen de désenclenchement (900) du moyen de blocage (9) comprend un fil (910) attaché au cliquet (92).

8. Dispositif (1) selon la revendication 6 et la revendication 7, **caractérisé en ce que** le fil (910) passe sensiblement par le centre (C) de la roue crantée (94), le moyen de blocage (9) étant désenclenché par traction sur le fil (910) depuis le centre de la roue crantée (94).

9. Dispositif (1) selon l'une quelconque des revendications 1 à 8, **caractérisé en ce que** chaque élément refermable (7) est un bras de capture (7) articulé comprenant une pluralité de segments d'articulation (72, 74, 76).

10. Dispositif (1) selon la revendication 9, **caractérisé en ce que** chaque bras articulé (7) est configuré pour se replier dans une position supplémentaire pour le transport du dispositif (1).

11. Dispositif (1) selon l'une quelconque des revendications 1 à 10, **caractérisé en ce qu'**il comprend au moins un élément de contact secondaire (5) mobile entre une position de déploiement et une position de sécurisation de la capture de l'objet spatial (2), l'élément de contact secondaire (5) étant configuré pour rester en position de déploiement durant le déplacement des éléments refermables (7) de la position d'ouverture à la position de fermeture.

12. Dispositif (1) selon l'une quelconque des revendications 1 à 11, **caractérisé en ce qu'**il comprend un amortisseur (400) de chocs mécaniques, notamment présent sur l'élément de pression (4) et/ou sur au moins un des éléments refermables (7).

13. Dispositif (1) selon l'une quelconque des revendications 1 à 12, **caractérisé en ce qu'**il comprend un adhésif réversible (500) comprenant une pluralité de filaments configurés pour former des liaisons de Van der Waals avec l'objet spatial (2).

14. Dispositif (1) selon l'une quelconque des revendications 1 à 13, **caractérisé en ce que** le moyen de transmission mécanique (6) comprend une pluralité d'éléments de transmission mécanique (60), chacun relié mécaniquement directement à un des éléments réfermables (7) ou à l'élément de pression (4), les éléments refermables (7) et les éléments de transmission mécanique (60) étant agencés sensiblement symétriquement soit par symétrie plane, soit par symétrie axiale.

## Patentansprüche

1. Vorrichtung (1) zum Einfangen eines Raumobjekts (2), **dadurch gekennzeichnet, dass** sie Folgendes umfasst:
- ein Druckelement (4), das dazu vorgesehen ist, mit dem einzufangenden Raumobjekt (2) in direkten mechanischen Kontakt zu kommen,
- einen Träger (3),
- mindestens zwei verschließbare Elemente (7), die zwischen einer Öffnungsposition im Hinblick auf das Einfangen des Raumobjekts (2) und einer Verschlussposition zum Halten des Raumobjekts (2) beweglich sind,
- ein Mittel (6) zur mechanischen Übertragung der Bewegung des Druckelements (4) auf jedes verschließbare Element (7), wobei das mechanische Übertragungselement (6) dazu vorgesehen ist, jedes verschließbare Element (7) zwischen der Öffnungsposition und der Verschlussposition durch Druck des Raumobjekts (2) auf das Druckelement (4) in Verschiebung anzutreiben, wobei die Vorrichtung (1) zum Einfangen **dadurch gekennzeichnet ist, dass** das mechanische Übertragungsmittel (6) Folgendes umfasst:
- mindestens einen Stützbalken (610), auf dem sich das Druckelement (4) befindet, wobei der Stützbalken (610) dazu vorgesehen ist, das Druckelement (4) in Translation in Bezug auf den Träger (3) zu verschieben,
- mindestens eine Verbindungsstange (62, 64, 66), die das Druckelement (4) mechanisch mit einem der verschließbaren Elemente (7) verbindet,
- mindestens ein Scharnier (80), das sich zwischen dem Träger (3) und dem verschließbaren Element (7) befindet, wobei die Verbindungsstange (62, 64, 66) das verschließbare Element (7) um das Scharnier (80) bei der Translationsverschiebung des Druckelements (4) in Bezug auf den Träger (3) schwenkt.

2. Vorrichtung (1) nach Anspruch 1, **dadurch gekennzeichnet, dass** sie derart ausgeführt ist, dass das Druckelement (4) mit dem Raumobjekt (2) in Öffnungsposition vor jedem direkten mechanischen Kontakt der verschließbaren Elemente (7) und des Raumobjekts (2) in direkten mechanischen Kontakt kommt.

3. Vorrichtung (1) nach Anspruch 1 oder Anspruch 2, **dadurch gekennzeichnet, dass** das mechanische Übertragungsmittel (6) ein Mittel (9) zur Feststellung mindestens eines der verschließbaren Elemente (7) in Verschlussposition umfasst.

4. Vorrichtung (1) nach Anspruch 3, **dadurch gekennzeichnet, dass** das mechanische Übertragungsmittel (6) ein Mittel (900) zum Ausschalten des Feststellmittels (9) umfasst.

5. Vorrichtung (1) nach Anspruch 3 oder Anspruch 4, **dadurch gekennzeichnet, dass** das Feststellmittel (9) eine Zahnstange (96) und mindestens eine Rastklinke (92) umfasst, wobei die Rastklinke (92) dazu vorgesehen ist, in die Zahnstange (96) einzugreifen, wobei eine Rückschlagvorrichtung gebildet wird.

6. Vorrichtung (1) nach Anspruch 3 oder Anspruch 4, **dadurch gekennzeichnet, dass** das Feststellmittel (9) ein Zahnrad (94) und mindestens eine Rastklinke (92) umfasst, wobei die Rastklinke (92) dazu vorgesehen ist, mit dem Zahnrad (94) in Eingriff zu gelangen, wobei eine Rückschlagvorrichtung gebildet wird.

7. Vorrichtung (1) nach Anspruch 4 und einem der Ansprüche 5 oder 6, **dadurch gekennzeichnet, dass** das Mittel (900) zum Ausschalten des Feststellmittels (9) einen Draht (910) umfasst, der an der Rastklinke (92) befestigt ist.

8. Vorrichtung (1) nach Anspruch 6 und Anspruch 7, **dadurch gekennzeichnet, dass** der Draht (910) im Wesentlichen durch die Mitte (C) des Zahnrads (94) verläuft, wobei das Feststellmittel (9) durch Zug auf den Draht (910) von der Mitte des Zahnrads (94) aus ausgeschaltet wird.

9. Vorrichtung (1) nach einem der Ansprüche 1 bis 8, **dadurch gekennzeichnet, dass** jedes verschließbare Element (7) ein gelenkiger Fangarm (7) ist, der eine Vielzahl von Gelenksegmenten (72, 74, 76) umfasst.

10. Vorrichtung (1) nach Anspruch 9, **dadurch gekennzeichnet, dass** jeder Gelenkarm (7) dazu vorgesehen ist, sich in eine zusätzliche Position für den Transport der Vorrichtung (1) umzulegen.

11. Vorrichtung (1) nach einem der Ansprüche 1 bis 10, **dadurch gekennzeichnet, dass** sie mindestens ein zweites Kontaktelement (5) umfasst, das zwischen einer ausgefahrenen Position und einer Sicherungsposition des Einfangens des Raumobjekts (2) beweglich ist, wobei das zweite Kontaktelement (5) dazu vorgesehen ist, während der Verschiebung der verschließbaren Elemente (7) von der Öffnungsposition in die Verschlussposition in ausgefahrener Position zu bleiben.

12. Vorrichtung (1) nach einem der Ansprüche 1 bis 11, **dadurch gekennzeichnet, dass** sie einen Dämpfer (400) für mechanische Stöße umfasst, der insbesondere auf dem Druckelement (4) und/oder auf mindestens einem der verschließbaren Elemente (7) vorhanden ist.

13. Vorrichtung (1) nach einem der Ansprüche 1 bis 12, **dadurch gekennzeichnet, dass** sie ein reversibles Haftmittel (500) umfasst, das eine Vielzahl von Filamenten aufweist, die dazu vorgesehen sind, Van der Waals-Verbindungen mit dem Raumobjekt (2) zu bilden.

14. Vorrichtung (1) nach einem der Ansprüche 1 bis 13, **dadurch gekennzeichnet, dass** das mechanische Übertragungsmittel (6) eine Vielzahl von mechanischen Übertragungselementen (60) umfasst, die jeweils direkt mechanisch mit einem der verschließbaren Elemente (7) oder dem Druckelement (4) verbunden sind, wobei die verschließbaren Elemente (7) und die mechanischen Übertragungselemente (60) im Wesentlichen symmetrisch, entweder durch Plansymmetrie oder durch Axialsymmetrie, angeordnet sind.

## Claims

1. Device (1) for capturing a space object (2), **characterised in that** it comprises:
- a pressure element (4) configured to come into direct mechanical contact with the space object (2) to be captured,
- a support (3),
- at least two reclosable elements (7) free to move between an open position for capturing the capture of the space object (2) and a closed position for retaining the space object (2),
- a means (6) of mechanically transmitting movement from the pressure element (4) to each reclosable element (7), the mechanical transmission means (6) being configured to entrain each reclosable element (7) in displacement between the open position and the closed position by pressure of the space object (2) on the pressure element (4),
the device for capturing a space object (2) being **characterized in that** the mechanical transmission means (6) comprises :
- at least one support bar (610) on which the pressure element (4) is located, the support bar (610) being configured to move the pressure element (4) in translation relative to the support (3),
- at least one connecting rod (62, 64, 66) mechanically connecting the pressure element (4) to one of the reclosable elements (7),
- at least one hinge (80) located between the support (3) and the reclosable element (7), the connecting rod (62, 64, 66) making the reclosable element pivot (7) about the hinge (80) during the translation displacement of the pressure element (4) relative to the support (3).

2. Device (1) according to claim 1, **characterised in that** it is configured so that the pressure element (4) comes into direct mechanical contact with the space object (2) in the open position, before any direct mechanical contact between the reclosable elements (7) and the space object (2).

3. Device (1) according to claim 1 or 2, **characterised in that** the mechanical transmission means (6) comprises a blocking means (9) in the closed position of at least one of the reclosable elements (7).

4. Device (1) according to claim 3, **characterised in that** the mechanical transmission means (6) comprises a means (900) of releasing the blocking means (9).

5. Device (1) according to claim 3 or 4, **characterised in that** the blocking means (9) comprises a rack (96) and at least one ratchet (92), the ratchet (92) being configured to engage with the rack (96) by forming a non-return device.

6. Device (1) according to claim 3 or 4, **characterised in that** the blocking means (9) comprises a notched wheel (94) and at least one ratchet (92), the ratchet (92) being configured to engage with the notched wheel (94) by forming a non-return device.

7. Device (1) according to claim 4 and either claim 5 or 6, **characterised in that** the means (900) of releasing the blocking means (9) comprises a wire (910) fixed to the ratchet (92).

8. Device (1) according to claims 6 and 7, **characterised in that** the wire (910) passes approximately through the centre (C) of the notched wheel (94), the blocking means (9) being released by tension on the wire (910) from the centre of the notched wheel (94).

9. Device (1) according to any one of claims 1 to 8, **characterised in that** each reclosable element (7) is an articulated capture arm (7) comprising a plurality of articulation segments (72, 74, 76).

10. Device (1) according to claim 9, **characterised in that** each articulated arm (7) is configured to fold back into an additional position for transport of the device (1).

11. Device (1) according to any one of claims 1 to 10, **characterised in that** it comprises at least a secondary contact element (5) free to move between an extension position and a secure position for capturing the space object (2), the secondary contact element (5) being configured to remain in the extension position during the displacement of the reclosable elements (7) from the open position to the closed position.

12. Device (1) according to any one of claims 1 to 11, **characterised in that** it comprises a mechanical shock absorber (400), particularly present on the pressure element (4) and/or on at least one of the reclosable elements (7).

13. Device (1) according to any one of claims 1 to 12, **characterised in that** it comprises a reversible adhesive (500) comprising a plurality of filaments configured to form Van der Waals forces with the space object (2).

14. Device (1) according to any one of claims 1 to 13, **characterised in that** the mechanical transmission means (6) comprises a plurality of mechanical transmission elements (60), each directly mechanically connected to one of the reclosable elements (7) or the pressure element (4), the reclosable elements (7) and the mechanical transmission elements (60) being arranged approximately symmetrically either by plane symmetry or by axial symmetry.
